# EUROPÄISCHE PATENTSCHRIFT

(11) **EP 1 584 500 B1**
(45) Veröffentlichungstag und Bekanntmachung des Hinweises auf die Patenterteilung: **11.02.2009**
(21) Anmeldenummer: 05005549.0
(22) Anmeldetag: 15.03.2005
(51) Int. Cl.: B60D 1/54, B60D 1/06

(54) **Anhängerkupplung**
Trailer coupling
Attelage de remorque

(30) Priorität: 08.04.2004 DE 202004005806 U
(43) Veröffentlichungstag der Anmeldung: 12.10.2005
(73) Patentinhaber: WESTFALIA - Automotive GmbH, 33378 Rheda-Wiedenbrück (DE)
(72) Erfinder: Abels, Frank O., 29633 Munster (DE); von Alm, Günther, 29614 Soltau (DE)
(74) Vertreter: Bregenzer, Michael

(56) Entgegenhaltungen:
- EP-A- 1 380 445
- DE-A1- 10 023 640
- DE-A1- 10 023 641
- DE-A1- 10 243 044
- DE-A1- 10 243 045
- DE-U1-6202004 006 66
- US-B1- 6 447 000

## Beschreibung

Die Erfindung betrifft eine Anhängekupplung für Kraftfahrzeuge gemäß dem Oberbegriff des Anspruchs 1.

Eine Anhängekupplung dieser Art ist z.B. aus DE 102 43 045 A1 bekannt.

Ein mit einer Kugel versehener Kupplungsarm wird mittels einer Vorrichtung zum Absenken und Schwenken aus einer von außerhalb des Kraftfahrzeuges z.B. nicht sichtbaren Ruhestellung in eine zum Befestigen eines Anhängers geeignete Betriebsstellung motorisch oder manuell angetrieben bewegt.

Es sind verschiedene Ausführungsformen solcher motorisch angetriebener Anhängekupplungen bekannt, z.B. aus der DE 198 26 618, DE 199 44 264 und DE 100 04 523, bei denen eine senkrecht stehende Kugelstange durch motorischen Antrieb zunächst axial nach unten bewegt werden, so dass die Kugel der Kugelstange unterhalb des Stossfängers liegt, danach wird die Kugelstange um ca. 90 DEG seitlich verdreht und anschließend motorisch wieder angehoben, bis die Kugelstange sich in der Betriebsstellung befindet. Diese Ausführungsformen haben folgende Nachteile:

Die Bodenfreiheit reicht je nach Fahrzeugtyp gelegentlich nicht aus, besonders wenn das Fahrzeug über einer Bordsteinkante steht.

Die senkrecht angeordnete Kugelstange hat eine Bauform, die bei modernen Fahrzeugen mit besonders niedrig liegender Kofferraumkante nicht in das Fahrzeug integriert werden kann -

Aufwendige Konstruktion - teilweise mit 2 Motoren - um die drei Bewegungsschritte Senken, Schwenken, Heben zu realisieren.

Aufwendige Steuerung der Bewegungsschritte entweder mechanisch oder elektrisch.

Passgenaue und damit teure Führungen erforderlich, die wegen der eingeleiteten Betriebskräfte teure Materialien und Bearbeitungsverfahren notwendig machen.

Es sind weitere Ausführungsformen bekannt, bei denen die Kugelstange an einem fahrzeugfesten Drehlager angeordnet sind und durch einen Motor die Kugelstange aus einer unterhalb des Fahrzeugbodens befindlichen Ruhestellung in die Betriebsstellung geschwenkt wird, wie z.B. in DE 196 54 867 und DE 196 12 959 oder WO 98/57 813 beschrieben. Diese Ausführungsformen haben folgende Nachteile:

Die Bodenfreiheit reicht bei bestimmten Ausführungsformen und Fahrzeugen ebenfalls nicht aus.

Bei einigen Fahrzeugformen sind sie wegen der Art des Fahrzeugbodens nur schwer oder gar nicht zu integrieren.

Die Getriebemotoren sind hohen Belastungen ausgesetzt, wodurch sie aufwendig und teuer werden. Es sind bei bestimmten Ausführungsformen zum Festsetzen der Kugelstange zusätzliche Verriegelungsvorrichtungen erforderlich, die starkem Verschleiß unterliegen und teuer in der Herstellung sind. -

Die Hauptschwenklager unterliegen starken Betriebskräften und müssen daher in aufwendigen und teuren Techniken hergestellt werden.

Es sind schließlich Ausführungsformen bekannt, z.B. DE 100 23 640 und DE 101 04 185, bei denen die Kugelstange schwenkbar in einem Lagerblock sitzt, wobei der Lagerblock selber um eine in Fahrzeugrichtung angeordnete Achse schwenken kann, wodurch eine senkende und danach schwenkende Bewegung erzeugt wird. Diese Ausführungsform, die sich zwar sehr gut in Fahrzeuge integrieren lässt, hat dennoch folgende Nachteile:

Zur Realisierung der Bewegung sind unter Umständen 2 Motoren erforderlich.

Es gibt wiederum drei Bewegungsschritte - Senken - Drehen - Heben - dazu ist eine spezielle Steuerung erforderlich

Die Herstellung ist wegen zweier großer, die ganz Last aufnehmenden Lager aufwendig und teuer.

Nachdem verschiedene motorisch angetriebene Anhängekupplungen mittlerweile produziert werden, und es sich herausgestellt hat, dass alle bekannten Typen in der Herstellung für den automobilen Massenmarkt zu teuer sind, ist es die Aufgabe der Erfindung, eine motorisch angetriebene Anhängekupplung zu schaffen, die besonders einfach und billig in der Herstellung ist.

Zur Lösung der Aufgabe ist eine Anhängekupplung gemäß der technischen Lehre des Anspruchs 1 vorgesehen.

Bei der erfindungsgemäßen Anhängekupplung kommen keine Drehlager, Verriegelungsvorrichtungen oder andere Bauteile mit hoher Fertigungsgenauigkeit zur Anwendung. Die zu bewegenden Teile werden innerhalb eines Gehäuses z.B. auf einer schiefen Ebene verschoben und ohne Verwendung eines Drehlagers z.B. über eine Kulissenführung in die Gebrauchsstellung befördert und dort durch eine Spindel nach dem Prinzip des Schraubstocks festgeklemmt. Durch den Anstellwinkel der schiefen Ebene wird die Absenkhöhe des Kugelarmes konstruktiv auf das jeweilige Fahrzeug angepasst.

Ein Ausführungsbeispiel der Erfindung ist in den folgenden Abbildungen dargestellt. Aus Gründen der Übersichtlichkeit wurde auf die Darstellung des Trägers, mit dem die Anhängerkupplung am Fahrzeug befestigt wird, verzichtet. Ebenso ist die Deckplatte des Gehäuses der Anhängerkupplung nicht dargestellt, da sie den Blick auf die Funktionsbaugruppen verbirgt.

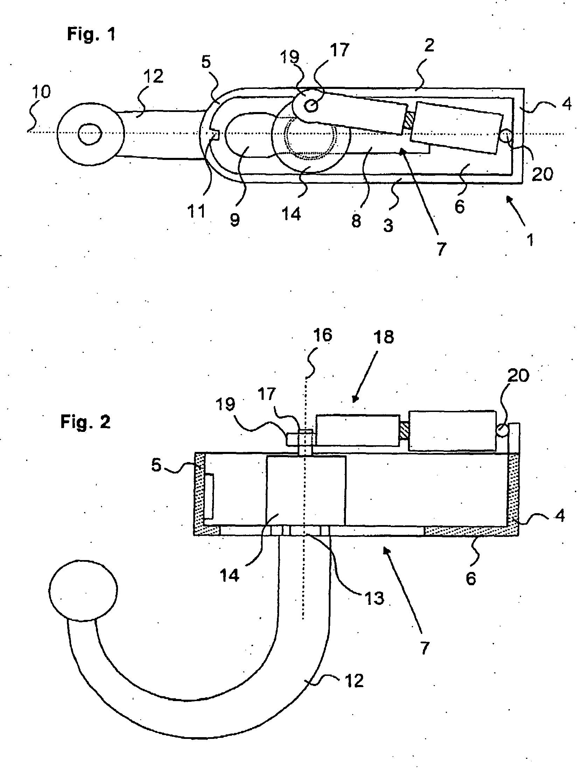

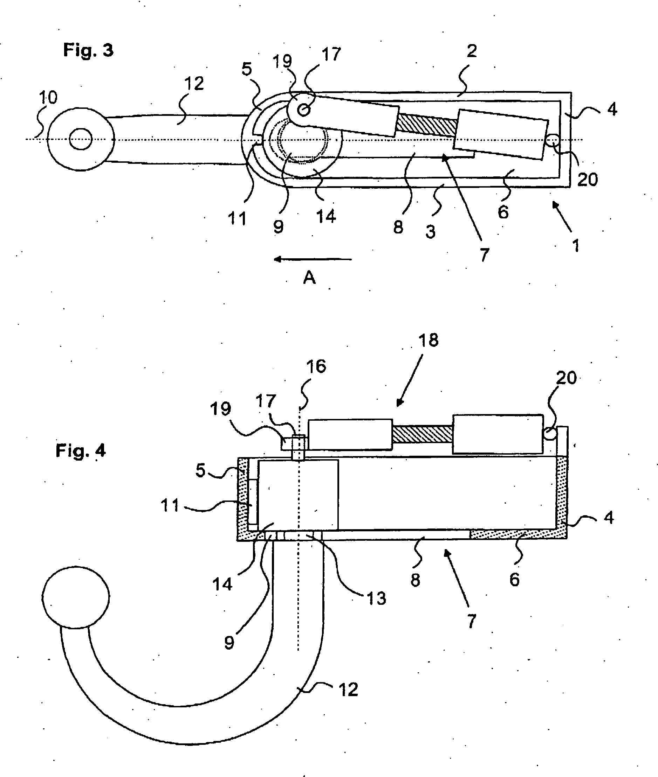

Anhand der Figuren 1 bis 8 wird die Funktion der Erfindung erläutert.

Eine beispielhafte Ausführung der erfindungsgemäßen Anhängerkupplung besteht aus einem wannenförmigen Gehäuse 1 mit Seitenwänden 2,3, einer Gehäuserückwand 4, einer vorderen Gehäusewand 5 sowie einem Gehäuseboden 6 mit einer Kulissenführung 7. An der vorderen Gehäusewand 5 befindet sich in Höhe einer Längsachse 10 eine senkrecht zum Gehäuseboden 6 angeordnete dachkantförmige Trapeznase 11. Im Gehäuseboden 6 ist die schlüssellochförmige Kulissenführung 7 angeordnet.

Durch die Kulissenführung 7 im Gehäuseboden 6 ragt ein Kugelarm 12 hindurch. Er ist im Bereich des Gehäusebodens 6 mit einer Führungsnut 13 ausgestattet, welche derart in die Kulissenführung 7 eingreift, dass eine Drehung des Kugelarmes 12 im Bereich eines rechteckigen Teiles 8 der Kulissenführung 7 verhindert und nur im Bereich eines runden Teiles 9 der Kulissenführung 7 erlaubt.

Der sich im Gehäuse 1 befindliche Teil des Kugelarmes 12 ist als Drehachsglied 14 ausgeführt. Das Drehachsglied 14 besitzt eine zylindrische Form, sein Durchmesser ist, ebenso wie der Durchmesser des Kugelarmes 12, größer als der Durchmesser bzw. die lichte Weite des rechteckigen und runden Teiles 8,9 der Kulissenführung 7.

An der Seite des Drehachsgliedes 14 ist senkrecht, also parallel zu einer Drehachse 16 des Kugelarmes 12, eine Nut 15 angeordnet, in welche in der Gebrauchsstellung die Trapeznase 11 eingreift.

An der Oberseite des Drehachsgliedes 14 ist außermittig eine Schwenkachse 17 angeordnet, an der ein Lagerauge 19 eines Linearantriebes 18 angreift. Der Linearantrieb 18 ist an der Gehäuserückwand 4 in einem Lager 20 schwenkbar gelagert.

Fig. 1 zeigt die Anhängerkupplung in Nichtgebrauchsstellung in einer Draufsicht, Fig. 2 in einer Seitenansicht.

Der Linearantrieb 18 ist ganz eingefahren, der Kugelarm 12 ist mit der Führungsnut 13 in den rechteckigen Teil 8 der Kulissenführung 7 zurückgezogen. Der Kugelarm 12 steht parallel zur Längsachse 10.

Fig. 3 zeigt die Anhängekupplung in einer Zwischenstellung in einer Draufsicht, Fig. 4 in einer Seitenansicht.

Der an der Schwenkachse 17 am Drehachsglied 14 angreifende Linearantrieb 18 ist ausgefahren und hat den Kugelarm 12 in dem rechteckigen Teil 8 der Kulissenführung 7 bis in den runden Teil 9 der Kulissenführung 7 in Pfeilrichtung A geschoben, bis das Drehachsglied 14 gegen die Trapeznase 11 der vorderen Gehäusewand 5 anschlägt, wodurch die lineare Bewegung des Kugelarmes 12 entlang der Längsachse 10 endet. Die Führungsnut 13 verhindert, solange sie in den rechteckigen Teil 8 der Kulissenführung 7 eingreift, ein Schwenken des Kugelarmes 12.

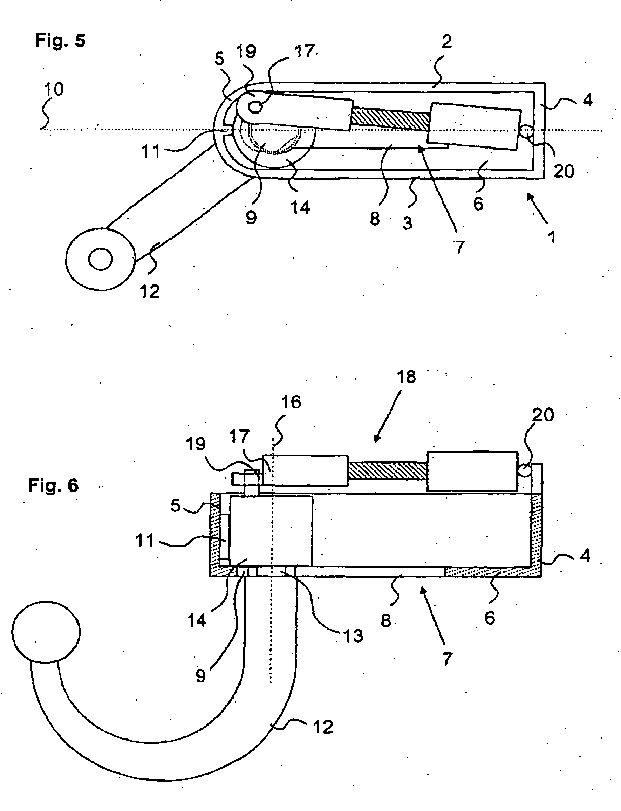

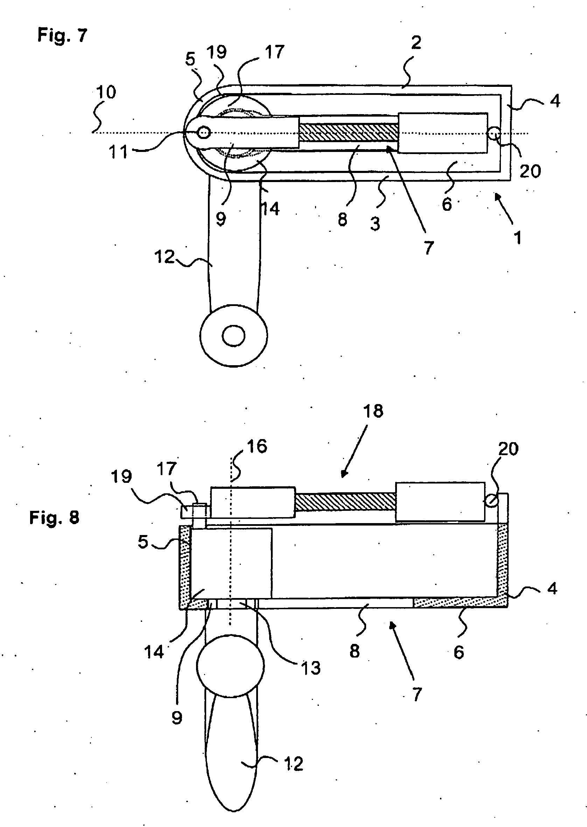

Fig. 5 zeigt die Anhängerkupplung in der Schwenkbewegung des Kugelarmes 12 aus der Zwischenstellung in die Gebrauchsstellung nach Fig. 7,8 in einer Draufsicht, Fig. 6 in einer Seitenansicht.

Durch den Anschlag des Drehachsgliedes 14 an der Trapeznase 11 ist die Längsbewegung des Kugelarmes 12 verhindert. Da die Führungsnut 13 am Kugelarm 12 nun in den runden Teil 9 der Kulissenführung 7 eingreift, welcher breiter ist als der rechteckige Teil 8, kann der Kugelarm 12 nun um die Drehachse 16 schwenken. Das Schwenken wird dadurch bewirkt, dass der Linearantrieb 18 nicht an der Drehachse 16 angreift, sondern an der außermittigen Schwenkachse 17. Der dadurch entstehende "Hebel" 21 bewirkt, das bei weiterem Ausfahren des Linearantriebes 18 der Kugelarm 12 in Richtung Gebrauchsstellung schwenkt.

Fig. 7 zeigt die Anhängerkupplung in der Gebrauchsstellung in einer Draufsicht, Fig. 8 in einer Seitenansicht.

Wenn der Kugelarm 12 die in Fig. 5,6 gezeigte Schwenkbewegung mit einem Winkel von ca. 90 DEG durchgeführt hat, stehen sich Trapeznase 11 und Nut 15 gegenüber. Durch die weitere Schubbewegung des Linearantriebes 18 wird der Kugelarm 12 noch ein Stück entlang der Längsachse 10 linear bewegt, bis die Trapeznase 11 in die Nut 15 eingreift und das Drehachsglied 14 an der vorderen Gehäusewand 5 flächig anliegt. Der Radius 23 des Drehachsgliedes 14 und der Radius 24 der halbkreisförmigen vorderen Gehäusewand 5 sind gleich groß. Dadurch wird, solange der Linearantrieb 18 das Drehachsglied 14 in der Gebrauchsstellung hält, der Kugelarm 12 verdrehfest und unverschiebbar in der Gebrauchsstellung gehalten. Kräfte, welche von außen auf den Kugelarm 12 einwirken, werden zum Grossteil in das Gehäuse 1 und nur zu einem geringen Teil in den Linearantrieb 18 eingeleitet.

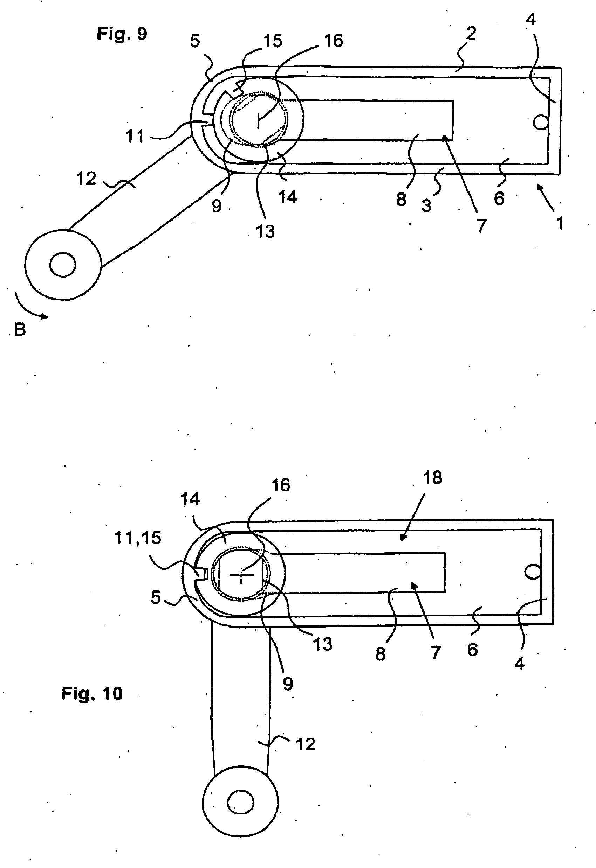

Fig. 9 zeigt in einer Draufsicht die Anhängerkupplung nach Fig. 5 in der Zwischenstellung beim Schwenken in die Gebrauchsstellung. Zur Verdeutlichung der Funktion ist der Linearantrieb 18 ebenso wie die Schwenkachse 17 hier nicht dargestellt.

Die Führungsnut 13 des Kugelarmes 12 befindet sich im runden Teil 9 der Kulissenführung 7, das Drehachsglied 14 liegt an der Trapeznase 11 an. Wie bereits bei Fig. 5 erläutert, kann der Linearantrieb 18 durch die außermittige Anlenkung an der Schwenkachse 17 das Drehachsglied 14 und damit den Kugelarm 12 in Pfeilrichtung B schwenken, bis die Trapeznase 11 und die Nut 15 im Drehachsglied 14 gegenüberstehen. Durch den weiteren Schub des Linearantriebes 18 wird das Drehachsglied 14 und damit der Kugelarm 12 noch ein Stück entlang der Längsachse 10 linear bewegt, bis die Trapeznase 11 in die Nut 15 eingreift und das Drehachsglied 14 an der vorderen Gehäusewand 5 flächig anliegt Damit ist die Gebrauchsstellung erreicht.

Fig. 10 zeigt in einer Draufsicht die Vorrichtung nach Fig. 7 in der Gebrauchsstellung.

Die Trapeznase 11 hat in die Nut 15 eingegriffen, das Drehachsglied 14 liegt flächig an der vorderen Gehäusewand 5 an. Kräfte, welche von außen beispielsweise durch einen Anhänger auf den Kugelarm (Kugelstange) 12 einwirken, werden zum Grossteil in das Gehäuse 1 eingeleitet, auf den Linearantrieb 18 wirken nur kleine Kraftanteile.

## Patentansprüche

1. Anhängekupplung für Kraftfahrzeuge, insbesondere Personenkraftwagen, mit einem Kupplungsarm (12), der einends ein hochstehend angeordnetes Kopfstück zum lösbaren Befestigen eines Anhängers trägt und anderenends mit einem bewegbar in einem Gehäuse (1) gelagerten Drehachsglied (14) fest verbunden ist, wobei der Kupplungsarm (12) mittels einer manuell oder kraftbetriebenen Vorschubeinrichtung zwischen einer nach hinten gerichteten Gebrauchsstellung und einer weiter vorne angeordneten Nichtgebrauchsstellung hin und her verstellbar ist, wobei sich die Verstellbewegung aus zwei Bewegungen zusammensetzt, bei denen das Drehachsglied (14) ausgehend von der Nichtgebrauchsstellung in einem ersten Bewegungsabschnitt in einem Gehäuse (1) verschoben und in einem zweiten Bewegungsabschnitt verschwenkt wird, so dass der Kupplungsarm (12) nach Vollendung beider Bewegungen, die sich überlagern können, die Gebrauchsstellung einnimmt, **dadurch gekennzeichnet, dass** sie einen exzentrisch zu einer Drehachse (16) des Drehachsglieds (14) schwenkbar an das Drehachsglied (14) angelenkten manuellen oder kraftbetriebenen Linearantrieb (18) zum Schwenken des Kupplungsarms (12) aufweist, wobei der Linearantrieb (18) den Kupplungsarm (12) geführt durch eine Führungseinrichtung zur Führung des Kupplungsarmes (12), die außerhalb des Gehäuses (1) angeordnete Führungselemente oder eine Kulisse (7) umfasst, so lange bewegt, bis die Führungseinrichtung den Kupplungsarm (12) zum Schwenken freigibt, und dass am Ende des Schwenkens eine Ausnehmung am Drehachsglied (14) in ein zu der Ausnehmung passendes Gegenstück (11) gleitet, wodurch der Kupplungsarm (12) im Gehäuse (1) verbunden mit dem Linearantrieb (18) festgesetzt und am weiteren Drehen gehindert ist.

2. Anhängekupplung nach Anspruch 1, **dadurch gekennzeichnet, dass** die Ausnehmung eine Nut (15) oder eine Bohrung oder eine ovale Ausnehmung oder eine trapezförmige Ausnehmung umfasst, zu denen das Gegenstück am Gehäuse (1) zum Zwecke des Festsetzens des Drehachsgliedes (14) passt.

3. Anhängekupplung nach Anspruch 1 oder 2, **dadurch gekennzeichnet, dass** der Kupplungsarm (12) unter einem Pressdruck des Linearantriebes (18) im Gehäuse (1) festgesetzt und an einem weiteren Drehen gehindert ist.

4. Anhängekupplung nach einem der vorhergehenden Ansprüche, **dadurch gekennzeichnet, dass** das Gehäuse (1) einen durchgehenden Gehäuseboden (6) oder mindestens zwei hintereinander in unterschiedlichen Winkeln zur Horizontale angeordnete Gehäusebodenteile aufweist.

5. Anhängekupplung nach Anspruch 1 **dadurch gekennzeichnet, dass** die außerhalb des Gehäuses (1) angeordneten Führungselemente Leitbleche oder Schienen zur Steuerung des Kupplungsarmes (12) umfassen.

6. Anhängekupplung nach einem der vorhergehenden Ansprüche, **dadurch gekennzeichnet, dass** der Linearantrieb (18) an eine vor das Drehachsglied (14) vorstehenden Schwenkachse (17) oder an ein innerhalb des Drehachsgliedes (14) angeordnetes Anlenkelement, insbesondere eine in das Drehachsglied integrierte Schwenkachse, schwenkbar an das Drehachsglied (14) schwenkbar an das Drehachsglied (14) angelenkt ist.

7. Anhängekupplung nach einem der vorhergehenden Ansprüche, **dadurch gekennzeichnet, dass** das Gehäuse (1) eine Schrägstellung bezüglich des Fahrzeuges einnimmt.

8. Anhängekupplung nach einem der vorhergehenden Ansprüche, **dadurch gekennzeichnet, dass** der Kupplungsarm (12) auf einer oder mehreren schiefen Ebenen des Gehäuses (1) beweglich ist.

9. Anhängekupplung nach einem der vorhergehenden Ansprüche, **dadurch gekennzeichnet, dass** der Linearantrieb (18) das Drehachsglied (14) durch seine außermittige Anlenkung an dieses schwenkt, bis die Ausnehmung (15) im Drehachsglied (14) und das Gegenstück einander gegenüberstehen, und dass das Drehachsglied (14) anschließend durch einen weiteren Schub des Linearantriebes (18) entlang der Längsachse (10) linear bewegt wird, bis das Gegenstück (11) in die Ausnehmung (15) eingreift und das Drehachsglied (14) an der vorderen Gehäusewand (5) flächig anliegt.

## Claims

1. Trailer coupling for motor vehicles, in particular cars, with a coupling arm (12) carrying at one end an upright head section for the releasable fastening of a trailer and at the other end firmly connected to a hinge element (14) mounted movably in a housing (1), wherein the coupling arm (12) is adjustable to and fro by means of a manual or powered feed mechanism between a position of use aligned backwards and an inoperative position located further forward, wherein the adjusting movement is comprised of two movements in which the hinge element (14) is shifted in a first movement section from the inoperative position into a housing (1), and in a second movement section is swivelled, so that after completion of both movements, which may overlap, the coupling arm (12) assumes the position of use, **characterised in that** it has a manually-operated or powered linear drive (18) for swivelling the coupling arm (12), hinged so as to pivot on the hinge element (14) eccentrically to a rotation axis (16) of the hinge element (14), wherein the linear drive (18) moves the coupling arm (12), guided by a guide device for guiding the coupling arm (12) and comprising guide elements or a gate (7) mounted outside the housing (1), until the guide device releases the coupling arm (12) for swivelling, and that on completion of swivelling a recess on the hinge element (14) slides into a mating element (11) matching the recess, by which means the coupling arm (12) is fixed in the housing (1) connected to the linear drive (18) and prevented from further rotation.

2. Trailer coupling according to claim 1, **characterised in that** the recess comprises a slot (15) or a bore or an oval recess or a trapezoidal recess, which the mating element on the housing (1) matches for the purpose of fixing the hinge element (14).

3. Trailer coupling according to claim 1 or 2, **characterised in that** the coupling arm (12) is fixed in the housing (1) under contact pressure from the linear drive (18) and is prevented from further rotation.

4. Trailer coupling according to any of the preceding claims, **characterised in that** the housing (1) has a continuous housing base (6) or at least two housing base sections arranged consecutively at different angles to the horizontal.

5. Trailer coupling according to claim 1, **characterised in that** the guide elements mounted outside the housing (1) comprise baffles or rails to control the coupling arm (12).

6. Trailer coupling according to any of the preceding claims, **characterised in that** the linear drive (18) is hinged pivotably at the hinge element (14), at a pivot axis (17) located in front of the hinge element (14), or to a hinge mounting element located within the hinge element (14), in particular a pivot axis integrated in the hinge element (14).

7. Trailer coupling according to any of the preceding claims, **characterised in that** the housing (1) assumes an inclined position relative to the vehicle.

8. Trailer coupling according to any of the preceding claims, **characterised in that** the coupling arm (12) is movable on one or more inclined planes of the housing (1).

9. Trailer coupling according to any of the preceding claims, **characterised in that** the linear drive (18), through its off-centre hinging to the hinge element (14), swivels the latter until the recess (15) in the hinge element (14) and the mating element are opposite one another, and that the hinge element (14) is then moved linearly by a further thrust of the linear drive (18) along the longitudinal axis (10) until the mating element (11) engages in the recess (15) and the hinge element (14) fits up flat against the front housing wall (5).

## Revendications

1. Attelage de remorque pour véhicules motorisés, en particulier des véhicules personnels, avec un bras d'attelage (12) qui porte à une extrémité une pièce de tête relevée pour la fixation amovible d'une remorque et est relié fixement à l'autre extrémité à un organe d'axe rotatif (14) monté mobile dans un boîtier (1), le bras d'attelage (12) pouvant être déplacé en va et vient au moyen d'un dispositif d'avance manuel ou motorisé entre une position d'utilisation dirigée vers l'arrière et une position de non-utilisation placée plus en avant, le mouvement de déplacement étant composé de deux mouvements dans lesquels l'organe d'axe rotatif (14) est déplacé en partant de la position de non-utilisation dans une première section de mouvement dans le boîtier (1) et est pivoté dans une deuxième section de mouvement, de sorte qu'au terme des deux mouvements, lesquels peuvent se superposer, le bras d'attelage (12) occupe la position d'utilisation, **caractérisé en ce qu'**il présente, pour faire pivoter le bras d'attelage (12), un entraînement linéaire (18) manuel ou motorisé articulé de manière pivotante sur l'organe d'axe rotatif (14) en position excentrée par rapport à un axe de rotation (16) de l'organe d'axe rotatif (14), l'entraînement linéaire (18) déplaçant le bras d'attelage (12) de manière guidée par un dispositif de guidage destiné à guider le bras d'attelage et qui comprend des éléments de guidage ou une coulisse (7) placés/placée à l'extérieur du boîtier (1), jusqu'à ce que le dispositif de guidage libère le bras d'attelage (12) pour son pivotement, et **en ce qu'**au terme du pivotement, un évidement de l'organe d'axe rotatif (14) glisse dans une contrepartie (11) correspondant à l'évidement, de sorte que le bras d'attelage (12) est immobilisé dans le boîtier (1) en étant relié à l'entraînement linéaire (18) et est empêché de poursuivre sa rotation.

2. Attelage de remorque selon la revendication 1, **caractérisé en ce que** l'évidement (15) comprend une rainure (15) ou un perçage ou un évidement ovale ou trapézoïdal, auquel correspond la contrepartie sur le boîtier (1) à des fins d'immobilisation de l'organe d'axe rotatif (14).

3. Attelage de remorque selon la revendication 1 ou 2, **caractérisé en ce que** le bras d'attelage (12) est immobilisé dans le boîtier (1) sous une pression de l'entraînement linéaire (18) et est empêché de poursuivre sa rotation.

4. Attelage de remorque selon l'une des revendications précédentes, **caractérisé en ce que** le boîtier (1) présente un fond de boîtier continu (6) ou au moins deux parties de fond de boîtier disposées l'une derrière l'autre suivant des angles différents par rapport à l'horizontale.

5. Attelage de remorque selon la revendication 1, **caractérisé en ce que** les éléments de guidage placés à l'extérieur du boîtier (1) sont des tôles directrices ou des rails pour commander le bras d'attelage (12).

6. Attelage de remorque selon l'une des revendications précédentes, **caractérisé en ce que** l'entraînement linéaire (18) est articulé de manière pivotante sur l'organe d'axe rotatif (14) au niveau d'un axe de pivotement (17) formant saillie devant l'organe d'axe rotatif (14) ou d'un élément d'articulation placé à l'intérieur de l'organe d'axe rotatif (14), en particulier un axe de pivotement intégré à l'organe d'axe rotatif (14).

7. Attelage de remorque selon l'une des revendications précédentes, **caractérisé en ce que** le boîtier (1) occupe une position inclinée par rapport au véhicule.

8. Attelage de remorque selon l'une des revendications précédentes, **caractérisé en ce que** le bras d'attelage (12) est mobile dans un ou plusieurs plans inclinés du boîtier (1).

9. Attelage de remorque selon l'une des revendications précédentes, **caractérisé en ce que** l'entraînement linéaire (18) fait pivoter l'organe d'axe rotatif (14) par son articulation excentrée sur celui-ci, jusqu'à ce que l'évidement (15) de l'organe d'axe rotatif (14) et la contrepartie se trouvent en face l'un de l'autre, et **en ce que** l'organe d'axe rotatif (14) est ensuite déplacé linéairement par une nouvelle course de l'entraînement linéaire (18) le long de l'axe longitudinal (10), jusqu'à ce que la contrepartie (11) s'engage dans l'évidement (15) et que l'organe d'axe rotatif (14) s'appuie contre la paroi antérieure (5) du boîtier.
